Europäisches Patentamt

European Patent Office

Office européen des brevets

(11) Publication number: **0 113 421**
A2

# (12) EUROPEAN PATENT APPLICATION

(21) Application number: **83111878.1**

(22) Date of filing: **28.11.83**

(51) Int. Cl.³: **B 25 B 23/10**
B 25 B 23/04, B 25 B 21/00

(30) Priority: **02.12.82 IT 2457282**

(43) Date of publication of application:
**18.07.84 Bulletin 84/29**

(84) Designated Contracting States:
**DE FR GB**

(71) Applicant: **Zucchelli, Mario**
**Via Matteotti, 45/60**
**I-20020 Arese Milano(IT)**

(72) Inventor: **Zucchelli, Mario**
**Via Matteotti, 45/60**
**I-20020 Arese Milano(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) **Automatic machine for installing inserts.**

(57) An automatic machine for installing such mechanical inserts as nails, bolts, screws, rivets, etc., is described, which allows the minimization of the effort to be exerted by the operator in installing an insert, while being handier and more practical to use. The automatic machine for installing inserts comprises an active assembly (4) to which a tool bit (5) is connected which cooperates with an insert holding head (2) adapted for connection to an automatically operated supply of such inserts; the active assembly (4) and head (2) being associated with a supporting structure and aligned to each other, also provided being a valve assembly (29) which fluidically drives the active assembly (4). The valve assembly (29) includes means for selectively connecting the active assembly (4) to a low pressure fluid supply and to a high pressure fluid supply.

EP 0 113 421 A2

./...

FiG. 2

"AUTOMATIC MACHINE FOR INSTALLING INSERTS"

This invention relates to an automatic machine for installing inserts.

In the specific field of the invention, there are known some machines which can pick up, selectively and automatically, inserts -- whether screws, bolts, rivets, split pins, or the like -- from a supply magazine, to feed them to an insert holding head where they are subjected to a mechanical action by an active member of the machine for their installation.

In general, with conventional machines, the insert holding head is connected in a movable manner to a carrier structure, to which inter alia, the active assembly is also connected, the active assembly being pushed forward during the insert application, such as during screw tightening, by the operator through said carrier structure.

This affords quite a few disadvantages, one, if not the primary, whereof is related to the effort required of the operator especially when, again in the exemplary instance of a screw driver, the head of a screw is to be pushed out of movable jaws supported on the insert holding head to allow the screw to be tightened on a piece.

In such condition, in fact, the jaws generally contact the piece surface, and accordingly, the pressure exerted by the operator has to overcome not only the elastic bias provided by suitable members located on the head and acting on the jaws but also the friction undergone by the jaws as a result of their condition of contact with the piece.

0113421

The fact that the insert holding head is supported movably on the carrier structure complicates, moreover, the operation of the cited machines as they are incorporated to automatic lines or transfer machines; in this case, the movement control and programming members are to accommodate the dimensional expansion or contraction to which the insert installation machines are subjected, thus bringing about an apparent complication in construction and higher cost.

In the light of the above technical problems, the task of this invention is to provide an automatic machine for installing inserts, which can obviate the above prior drawbacks to afford a significant reduction in the effort to be exerted by the operator.

The automatic machine according to the invention must be enough versatile and handy as to be indifferently usable, without substantial alteration, as a portable tool or on automated insert installing lines.

Furthermore the automatic machine according to the invention must be able to prevent direct contact, in operations that would involve it, between a workpiece and the movable jaws.

Moreover the machine according to the invention must be able to retain constant dimensional characteristics throughout its operation, thereby its use may be simplified where incorporated to automated assembly lines.

0113421

This task is achieved by an automatic machine for installing inserts, which comprises an active assembly whereto a tool bit is connected and which operates in cooperation with an insert holding head connectable to an automatic dispenser of such inserts, said active assembly and said head being associated with a carrier structure and aligned to each other, there being also provided a valve assembly fluid-driving said active assembly, and is characterised in that said valve assembly includes means for selectively connecting said active assembly to a low pressure fluid supply and a high pressure fluid supply.

Further features and advantages of the invention will be more clearly apparent from the following detailed description of preferred, but not exclusive, embodiments of this automatic machine for installing inserts, as illustrated by way of example and not of limitation in the accompanying drawings, where:

Figure 1 is a general view, in front elevation, of the automatic machine according to the invention;

Figure 2 is a longitudinal section view of the same machine which, for convenience of illustration, has been split in two portions located, respectively, fully to the right and to the left of the drawing sheet;

Figure 3 is a plan view of the machine upper cap as viewed from the side coupled to the carrier structure;

Figure 4 is a detail view showing in plan the carrier structure at the coupling portion to the cited upper cap;

Figure 5 is a plan view showing a detail of the carrier structure as viewed from the opposite side to the view of Figure 4;

Figure 6 shows a perspective view of a detail of the active assembly;

Figures 7 to 9 schematically illustrate longitudinal sections through this automatic machine for installing inserts depicting the operation thereof;

Figure 10 shows a modification of the active assembly of the machine according to the invention;

Figure 11 is a sectional, partly cut away, view of a different embodiment of this automatic machine for the installation of inserts; and

Figure 12 shows, to an enlarged scale, a detail of the head of the automatic machine of Figure 11, shown in section.

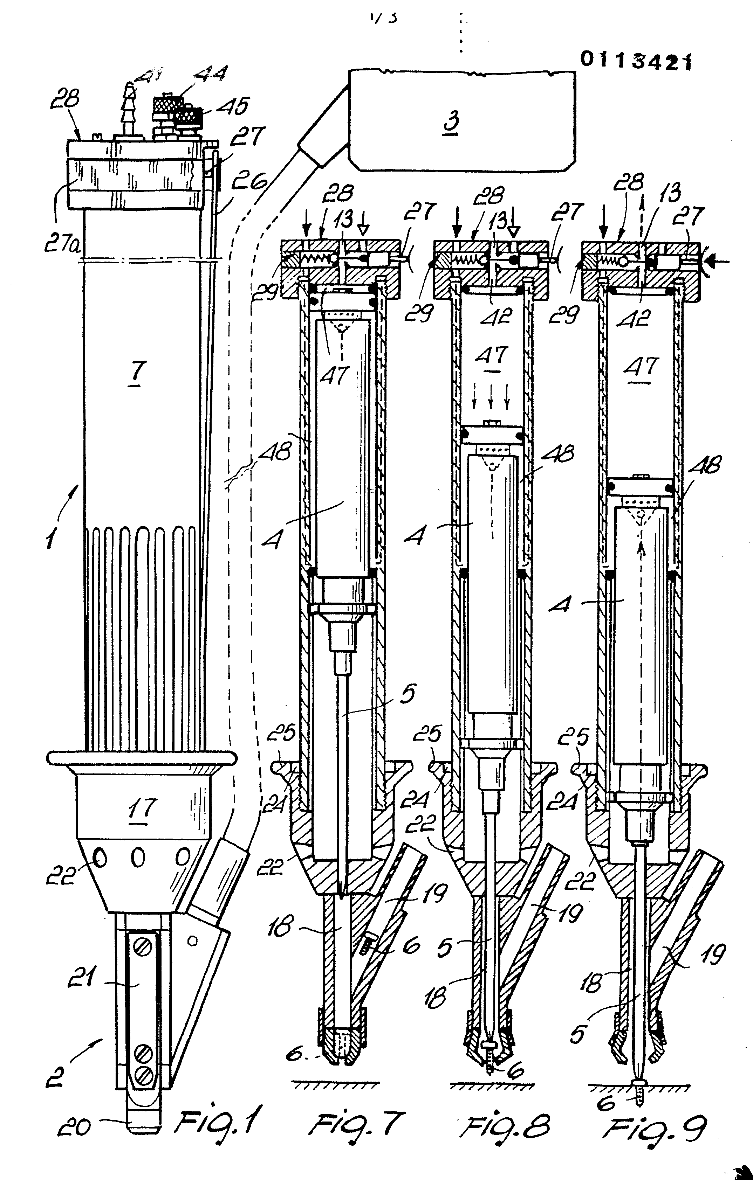

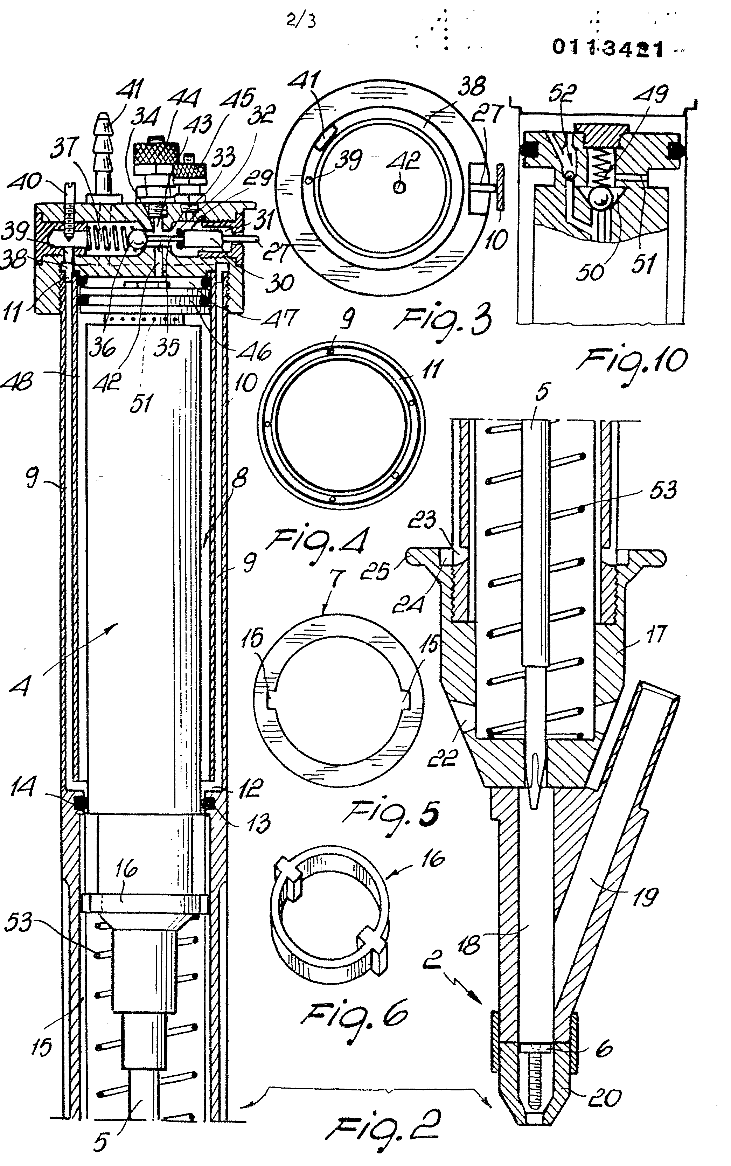

Making reference to the cited drawing figures and in particular to Figures 1 and 2, this automatic machine for installing inserts essentially comprises a carrier structure 1, wherewith an insert holding head 2 is associated which may be connected to an automatic dispenser of the cited inserts, of a type known per se and as indicated at 3, which carries slidably therein an active assembly 4 to which a tool bit 5 is connected, in the example shown being formed by a screw driving member because the machine shown is set up for inserting screws 6.

The carrier structure may include, for example, a tubular body 7 defining a chamber 8 on its inside and having a plurality of conduits 9 which are substantially parallel to the generatrices of the tubular body and formed in the thickness of its shroud 10.

Such conduits extend from one end of the tubular body where they communicate with each other through an annular cavity 11 to run inside the shroud 10 along a portion of the tubular body as far as a groove 12 wherewith they are communicated and which is also formed in the shroud 10 at a middle region of the body 7.

Also provided, adjacent and coaxial with the groove 12 at a similar middle region of the body 7, is a seat 13 accommodating a sealing ring 14 which sealingly engages with said active assembly 4.

According to a preferred embodiment, the body 7 has, again in its internal cavity, grooves 15 which extend for example along diametrically opposed generatrices, from an area adjacent the seat 13 as far as the opposite end to the annular cavity of the body itself.

Such grooves slidably engage a ring 16 which is connected to the active assembly to prevent it from rotating under drag forces as it imparts a torque to the screw 6 during the driving operation.

At the corresponding end to the inlet areas of the grooves 15, the body 7 carries a nose 17 whereto the head 2 is connected which has on its inside a cavity 18 aligned to the active assembly and being connected to an intake channel 19 for the screws 6 from the dispenser 3.

Said channel is suitably inclined to promote a correct positioning of the screw in the head, where the screw is held by oscillating jaws 20 which are anchored elastically to the head such as by means of elastic reeds 21.

The nose 17 has a plurality of discharge holes 22 disposed at a proximate area to the insert holding head and communicated to the chamber wherein the active assembly 4 is caused to slide so as to allow appropriate venting of the fluid, usually compressed air, which acts on the active assembly.

Additional discharge holes 23 may be formed in the body 7 at the area where it merges with the nose; in this case, the nose would be preferably formed with an annular groove 24 to improve the venting conditions for the active fluid.

Again at the cited groove 24, the nose has a ring-like ridge 25 which has the function of making the machine easier to hold        when the same is used manually as a portable tool.

The groove 24, furthermore, provides the machine with a seat for accommodating an actuating lever 26 inserted in the groove itself and acting on an actuating pushbutton 27 accommodated slidably within an upper cap 28 which is, in turn, connected to the body 7 on the opposite end to the nose.

To hold the lever 26 in contact with the pushbutton 27, there is also provided a spring ring 27a which is carried on the cap 28 and acts on the cited lever.

The upper cap carries a valve assembly which is generally designated with the reference numeral 29 and comprises essentially a small guide cylinder 30 arranged to slide within a first cavity 31 to drive the valve assembly.

At the opposite end to the pushbutton the small cylinder carries a gasket 32 adapted to sealingly engage with an abutment 33 in the first cavity 31 and extends through a communication channel 34 with a pusher 35 adapted to cooperate with a one-way valve 36 accommodated in a second cavity 37.

The second cavity is in fluid communication with a distributing annulus 38 formed in the upper cap and corresponding to the annular cavity 11 to which it is coupled as the cap is positioned onto the body 7.

The communication between the second cavity and distributing annulus is established through a hole 39 whose flow passage area may be adjusted by means of a set screw 40, and the annulus 38 is supplied from a high pressure supply of conventional design via a high pressure header 41.

The communication channel 34 has a first branching conduit 42 opening into the chamber 8 and a second branching conduit 43 feeding a drive header 44 which cooperates with the dispenser 3 through a conventional pneumatic circuit.

The chamber 31 is in turn connected to a low pressure header 45, thereby it provides, through the valve assembly, means for selectively connecting the chamber to a low pressure fluid supply or to a high pressure fluid supply.

At the same time, in the chamber and at the end facing the upper cap, the active members 4 carry a piston element 46 which engages sealingly within the chamber and divides the same into an upper portion 47, between the piston element and cap, and lower portion 48, between the piston element and ring 14.

Arranged internally to the piston element is a second one-way valve 49, e.g. of the ball type, being accommodated in a conical seat 50, which is communicated with the lower portion of the chamber 8 by means of plural radial holes 51, e.g. as formed in the connective portion between the piston element and active assembly.

The valve 49 is shown in Figure 10 which illustrates one possible example of a modification of the valve assembly intended to eliminate the need for the pushbutton control 27.

In this embodiment, and similarly to the former, the valve 49 is driven in a manner known per se by the screw driver tool bit as the latter is being pressed against the screw 6 to insert it.

The piston element and active assembly have a selection valve 52 therein, e.g. a ball-type valve, which connects the portion downstream of the valve 49 to the upper portion of the chamber 8 so as to calibrate the pressure level of the working fluid acting on the piston element. A further improvement in the operation may be achieved by interposing, between the nose 17 and active members, an elastic bias element, such as one formed by a fluidic damper or a coil spring 53 (as in the embodiment according to Fig.2) arranged coaxially with the screw driver member 5 and engaging with the ring 16,which allows determination, in accordance with the bias force opposed to the downward movement of the active members during the low pressure supply step and prior to the operation proper of installing the insert of the stop position of the active members themselves to enable, for example, a first action on the insert adapted to cause it to protrude slightly from the jaws 20 to facilitate its visual positioning.

With reference to Figures 7 to 9, the machine according to this invention operates as follows.

The high pressure fluid, shown in the cited views by the full-line arrow, is fed through the high pressure fitting 41 which is continuously distributing, through the annulus 38 and annular cavity, over the conduits 9 to the lower portion of the chamber.

In this condition, the fluid will act on that side of the piston element which faces said lower portion, to cause the active assembly to slide toward the upper cap, thereby the driver member 5 can release the insert holding head and allow the feeder 3 to supply a single insert, which will arrange itself at a corresponding position to the oscillating jaws.

In the meantime, the drive fitting will control the delivery of low pressure fluid through the fitting 45; that fluid, after flowing through the chamber 31, communication channel, and branching

0113421

conduit 42, reaches the upper portion of the chamber and acts on the piston element.

Owing to the surface of the piston element at the end facing the upper cap being larger than the surface on which the high pressure fluid is caused to act in the lower portion, the piston element, and accordingly the active assembly, are moved toward the head 2 along a downward path and under the possible bias force of the elastic element.

In accordance with the elastic constant of said element and with the drag force met by the insert in moving past the oscillating jaws 20 and for overcoming the drag force from the reeds 21, the active assembly will locate itself in a preparatory condition to the installation of the insert, by possibly causing the cited insert to protrude at least in part from the oscillating jaws.

On completion of the preceding step, the operator will act via the lever 10 on the actuating pushbutton 27 which, through the pusher 35, controls the one-way valve 36 to communicate the upper portion of the chamber to the parts of the valve assembly which are supplied with high pressure fluid, and in particular to the second cavity 37.

Thanks to the set screw 40, it is possible to meter the flow of high pressure fluid being delivered to the chamber upper portion so as to control the rate at which the active member will move down during the insertion operations.

In the meantime the insert, in this specific instance the screw 6, has come to contact the material whereinto it is to be inserted, and hence, will oppose a resisting force which acts axially on the inserter member 5; this force is transferred on the valve 49, which admits high pressure fluid, as delivered into the chamber lower portion over the conduits 9, to the active member, which will install the insert in a manner known per se.

Again where the insert happens to be a screw, the ring 16, by engaging with the grooves 15 and simultaneously with the active assembly, prevents the latter from rotating, which rotational movement would be otherwise induced by the resisting force met by the screw in penetrating the material in which it is to be installed.

The fluid used up by the active assembly is at the same time discharged through the holes 22 and 23, and on completion of the installation operation, the high pressure fluid present in the upper portion of the chamber is let out through the drive fitting and utilised to control, inter alia, the supply of a fresh insert to the head.

During operation of the pushbutton 27, the gasket 32 engages with the abutment 33 to discontinue the delivery of low pressure fluid into the chamber upper portion.

The supply of low pressure fluid may be advantageously derived from the high pressure fluid supply through a pressure reducing valve of a known type, and accordingly not shown in the accompanying drawings.

The selecting valve shown in Figure 10 allows the pushbutton 27 to be eliminated because as soon as the working pressure required for driving the insert is reached in the active assembly, this same pressure is also automatically established in the upper portion of the chamber while low pressure fluid is prevented from escaping from the upper portion with the selecting valve not open, as shown for example in Figure 10.

It has been found in actual practice that the automatic machine just described can readily accomplish an accurate and effective installation of any types of inserts in any materials, within an extremely short time and in a fully automated fashion.

It has also been found that it affords a significant reduction in the effort to be applied by the operator because the automatic machine allows the movable jaws of the head to be held away from the material wherein the insert is to be installed.

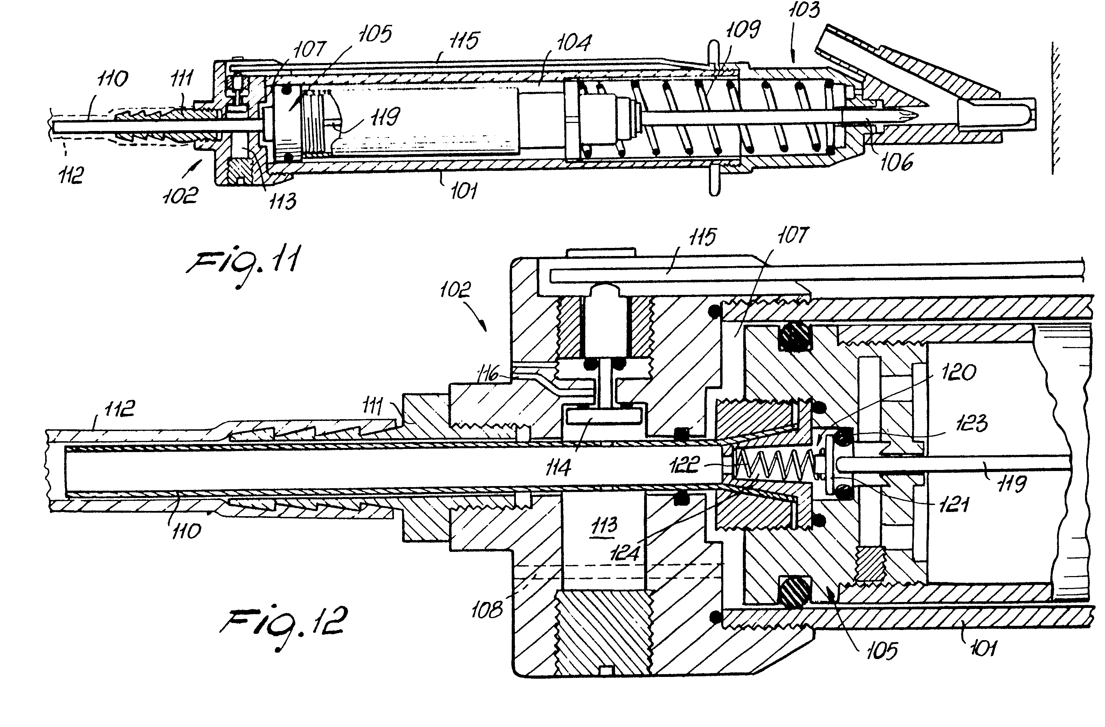

The invention as described hereinabove is susceptible to many modifications and variations without departing from its inventive principle. Thus, as an example, and as shown in Figures 11 and 12, the automatic machine structure for installing inserts, according to the invention, may comprise a tubular outer case, generally designated with the reference numeral 101, which would be closed at one end by a headpiece, generally designated with the reference numeral 102 and carrying valving elements

0113421-

as more fully described hereinafter. The tubular element 101 is closed, at its other end, by an insert holding head, indicated at 103 and of a type known per se, which is connected to an insert feeding assembly, the inserts being of any desired types.

Inside the cited tubular outer case 101, there is defined a cylindrical cavity 104, wherein an active assembly, generally designated with the reference numeral 105 and carrying on its working end a tool bit 106 formed in this specific instance by a screw driver tool bit, is movable in sealed relationship.

Said active assembly defines inside the cylindrical cavity 104, on the headpiece 102 side, a part or chamber indicated at 107, which is selectively in communication, via a conduit 108, with a low pressure working fluid generator having the function of producing the axial translation of the active assembly required to effect the initial positioning of the insert, and with a high pressure working fluid generator for feeding the active assembly forward.

Acting on the other end of the active assembly is a bias spring 109 which is calibrated to adjust as desired the forward feed distance for the initial positioning of the insert.

A peculiar aspect of this embodiment resides in that the active assembly may be connected to a compressed air supply by means of a tubular, substantially flexible, length 110 which is passed in sealed relationship and in an axial direction through the headpiece 102 and is connected centrally to the active assembly 105 so as to deliver the high pressure working fluid directly in an axial direction, thus eliminating the need for providing circumferential conduits inside the outer case 101.

The tubular length 110 is passed through an inlet ring nut 111 threaded into and connected to a hose 112 supplying line air coming from the generator, not shown in the drawing.

Between the conduit 112 and tubular length 110, there is provided a seeping region which communicates the line pressure to a control chamber 113 on which a shutter 114 acts which may be controlled by means of a lever 115 and is adapted to controllably admit the pressurised air through the control channel 116 which is designed to admit high pressure working fluid into the chamber 107 via the conduit 108, to feed forward the tool bit following the initial positioning step, which takes place automatically upon delivery of the insert.

After the initial positioning of the insert, i.e. with the insert in view, the operator, by manipulating the lever 115, will admit a high pressure into the chamber 107 to feed the tool bit forward. Further, control of the admission of line pressure to the assembly 105 is simply accomplished by pressing the machine against the insert such that the stem 119 which extends axially inside the assembly 105 is caused to act on the control valving assembly for high pressure, indicated at 120, which comprises in this case a small disk 121 elastically biased by the spring 122 which seals against an O-ring 123 defined at the inlet 124

0113421

for the pressurised fluid inside the active assembly, to perform for example the tool bit rotation; during the insert installation step, the high pressure admitted to the assembly 105 will rotate the tool bit, while the high pressure admitted through the channel 108 into the chamber 107 will provide, in the manner indicated, for feeding forward the tool bit and insert.

Thus, the invention achieves its objects, and in particular, the utilisation of the flexible tubular length 110, which is connected axially to the active assembly 105 and sealingly passed through the headpiece 102 allows line pressure to be admitted even as the assembly 105 slides axially, without resulting of necessity in increased axial dimensions of the machine which would be inconvenient for the operator.

Moreover, the structure just described is highly simplified over those currently in use and affords, in addition to decreased outside dimensions of the device, a considerably simplified construction.

Further, all of the details may be replaced with other, technically equivalent elements.

In practicing the invention, the materials used, as well as the dimensions, may be any selected ones contingent on requirements and the state of the art.

## CLAIMS

1. Automatic machine for installing inserts, comprising an active assembly (4) whereto a tool bit (5) is connected and which cooperates with an insert holding head (2) connectable to an automatic dispenser of such inserts, said active assembly (4) and said head (2) being associated with a carrier structure and aligned to each other, there being also provided a valve assembly (29) fluid-driving said active assembly, characterised in that said valve assembly (29) includes means for selectively connecting said active assembly (4) to a low pressure fluid supply and a high pressure fluid supply.

2. Automatic machine for installing inserts, comprising an active assembly (4) whereto a tool bit (5) is connected and which cooperates with an insert holding head (2) connectable to a dispenser of such inserts, said active assembly (4) and said head (2) being associated with a carrier structure and aligned to each other, there being further provided a valve assembly fluid-driving said active assembly, characterised in that said active assembly (4) includes a piston element (46) and is slidable within a chamber (8) in said carrier structure, said piston element (46) and said chamber (8) defining, at the opposed end to said tool bit (5), an upper chamber (47) in fluid connection with said valve assembly (29) and in that said valve assembly (29) comprises means for selectively connecting said upper chamber (47) to a low pressure fluid supply and a high pressure fluid supply.

3. Automatic machine according to Claim 2, characterised in that said upper chamber (47) is closed at one end by an upper cap (28), said piston element (46) having, on the side facing said upper cap (28), a face with a larger surface area than an opposite face directed toward said tool bit (5).

4. Automatic machine according to one or more of the preceding claims, characterised in that said carrier structure comprises a tubular body (7)in the thickness of shroud (10) of said body (7) there being formed a plurality of conduits (9) in fluid communication with said high pressure fluid supply and communicating to a lower portion (48) of said chamber (8).

5. Automatic machine according to one or more of the preceding claims, characterised in that said valve assembly (29) comprises a drive fitting (30) in fluid communication with said chamber (8) and being adapted to detect the pressure condition thereof to selectively control said supplies and said insert dispenser.

6. Automatic machine according to one or more of the preceding claims, characterised in that it comprises an elastic bias element (53) intervening between said active assembly (4) and said insert holding head (2).

7. Automatic machine according to one or more of the preceding claims, characterised in that said low pressure fluid supply is derived from said high

- 18 -

0113421

pressure fluid supply with the interposition of a pressure regulator.

8. Automatic machine for installing inserts, comprising a tubular outer case (101) closed at one end by a headpiece (102) with valving elements for connection to a low and high pressure working fluid generator, and at the other end connected to an insert holding head (103), said tubular case (101) defining on the interior thereof a cylindrical cavity (104) wherein an active assembly (105) is slidable in sealed relationship a tool bit (106) being connected to said assembly (105); that portion (107) of said cylindrical cavity (104) which is included between said headpiece (102) and said active assembly (105) being adapted for communication with said fluid generator to move the insert into an in-view position under a high pressure for feeding forward said active assembly (105), characterised in that it comprises a tubular length (110) sealingly passed axially through said headpiece (102) and being connected to said active assembly (105) for the delivery of said high pressure working fluid.

9. Automatic machine for installing inserts, according to Claim 8, characterised in that it comprises in said headpiece (102) a control chamber (113) wherethrough said tubular length (110) is passed and being swept by seepage of high pressure working fluid to control the admission of high pressure working fluid into said portion (107) as defined between said headpiece (102) and said active assembly (105) to feed forward said active assembly (105).

10.   Automatic machine           for installing
inserts, according to one or more of the preceding
claims, characterised in that it comprises, within
said control chamber (113), a shutter (114) actuatable
by means of an outer lever (115) and controlling the
communication port of a control conduit (116) for
causing the admission of the high pressure working
fluid into said portion (107) defined between said
headpice (102) and said active assembly (105).

11.   Automatic machine           for installing
inserts, according to one or more of the preceding
claims, characterised in that said tubular length (110)
is passed through an inlet ring nut (111) connected
axially to said headpiece (102) and being adapted
to fit onto the line air intake flexible conduit (112).

12.   Automatic machine           for installing
inserts, according to one or more of the preceding
claims, characterised in that said tubular length
(110) opens, on the side of said active assembly (105),
into an inlet (124) where a valving element (120)
is operative which includes a small disk (121)
biased elastically toward a sealing 0-ring (123)
and being linearly movable to establish communication
between said tubular length (110) and said active
assembly (105) upon sliding movement of a stem (119)
connected to said tool bit (106), said sliding
movement being performed by compression during the
insert installation step.

0113421

Fig.1  Fig.7  Fig.8  Fig.9

Fig.2

Fig.3

Fig.4

Fig.5

Fig.6

Fig.10

Fig.11

Fig.12